# EUROPEAN PATENT APPLICATION

(11) **EP 4 538 116 A1**
(43) Date of publication of application: **16.04.2025**
(21) Application number: 23819442.7
(22) Date of filing: 27.02.2023
(51) Int. Cl.: B60R 11/02, B62D 49/00

(54) **WORK VEHICLE**

(30) Priority: 08.06.2022 JP 2022092905
(71) Applicant: Kubota Corporation, Osaka 556-8601 (JP)
(72) Inventor: NISHIKUBO, Takuya, Sakai-shi, Osaka 590-0908 (JP); MITANI, Toshiki, Sakai-shi, Osaka 590-0908 (JP); KAWANISHI, Daisuke, Sakai-shi, Osaka 590-0908 (JP); SAKAMOTO, Ryosuke, Sakai-shi, Osaka 590-0908 (JP); TOKUYASU, Yoichi, Sakai-shi, Osaka 590-0908 (JP)
(74) Representative: Müller-Boré & Partner Patentanwälte PartG mbB
(86) International application number: PCT/JP2023/007106
(87) International publication number: WO 2023/238454

(57) **Abstract**

Provided is a working vehicle capable of easily changing a position of a position detection device.

Provided are a position detection device 100 capable of detecting a position of a vehicle body, a support frame 300 that supports the position detection device 100 and is disposed to extend over left and right pillars 12 of a cabin 10, and a coupling portion (first coupling portion 400, second coupling portion 500) that rotatably couples the support frame 300 to each of the left and right pillars 12.

## Description

### TECHNICAL FIELD

The present invention relates to a technique of a working vehicle.

### BACKGROUND ART

Conventionally, a technique of a working vehicle including a position detection device capable of detecting a position of a vehicle body is known. For example, Patent Literature 1 discloses such a technique.

Patent Literature 1 describes a tractor including an antenna unit capable of detecting a position of a vehicle body by receiving a radio signal from a positioning satellite constituting a satellite positioning system. The antenna unit is attached so as to be located at the center of a cabin in a left-right direction. Furthermore, the antenna unit is rotatably attached between a normal use position protruding upward from a roof of the cabin and a non-use position lower than the roof.

In the tractor described in Patent Literature 1, when the position of the antenna unit is changed, it is necessary to rotate the antenna unit by the hand of a worker and fix the antenna unit at a changed position. Here, since the antenna unit is located at the center of the cabin in the left-right direction, the antenna unit is located at a position that is difficult for the worker standing on the side of the tractor to reach. For this reason, it is considered that it is difficult to perform work for changing the position of the antenna unit because the worker needs to perform the work using a stepladder or the like when performing the work of the position change.

### CITATION LIST

### PATENT LITERATURE

Patent Literature 1: JP 6640767 B2

### SUMMARY OF INVENTION

### TECHNICAL PROBLEM

One aspect of the present disclosure has been made in view of the above circumstances, and an object of the present disclosure is to provide a working vehicle capable of easily changing a position of a position detection device.

### SOLUTION TO PROBLEM

The problem to be solved by one aspect of the present disclosure is as described above, and means for solving the problem will be described below.

A working car according to one aspect of the present disclosure includes: a position detection device capable of detecting a position of a vehicle body; a support frame that supports the position detection device and is disposed to extend over left and right pillars of a cabin; and a coupling portion that rotatably couples the support frame to each of the left and right pillars.

According to one aspect of the present disclosure, the position of the position detection device can be easily changed.

The support frame according to an aspect of the present disclosure is disposed such that both ends of the support frame are located outside the left and right pillars.

According to one aspect of the present disclosure, the position of the position detection device can be easily changed.

The coupling portion according to one aspect of the present disclosure includes a fixing member fixed to each of the pillars; and a support member attached to the fixing member and rotatably supporting the support frame.

According to one aspect of the present disclosure, the support frame can be easily rotated.

The coupling portion according to one aspect of the present disclosure includes: the coupling portion includes: a first coupling portion that rotatably couples one end portion of the support frame to one of the left and right pillars; and a second coupling portion that rotatably couples another end portion of the support frame to another of the left and right pillars, the first coupling portion includes a first support hole through which the one end portion of the support frame is inserted and that rotatably supports the one end portion of the support frame, and the second coupling portion includes a second support hole through which the another end portion of the support frame is inserted and that rotatably supports the another end portion of the support frame, the second support hole having an inner diameter larger than an inner diameter of the first support hole.

According to one aspect of the present disclosure, the support frame can be easily rotated.

A friction force applying mechanism that is provided in the coupling portion according to an aspect of the present disclosure and applies a friction force to rotation of the support frame is provided.

According to one aspect of the present disclosure, the position of the position detection device can be easily adjusted.

The friction force applying mechanism according to one aspect of the present disclosure is provided only in the first coupling portion of the first coupling portion and the second coupling portion.

According to one aspect of the present disclosure, the friction force can be suitably applied.

A restriction portion that is provided only in the second coupling portion of the first coupling portion and the second coupling portion according to one aspect of the present disclosure and restricts rotation of the support frame at a predetermined position is provided.

According to one aspect of the present disclosure, the position of the position detection device can be easily adjusted.

A takeout port that is provided in the cabin according to an aspect of the present disclosure and through which wiring connected to the position detection device is taken out from an inside to an outside of the cabin is provided, and the takeout port is disposed in a vicinity of a rotation shaft of the support frame.

According to one aspect of the present disclosure, it is possible to suppress application of a load to the wiring in accordance with a change in position of the position detection device.

A cover member that is provided on the support frame and covers at least a part of the wiring according to an aspect of the present disclosure is provided.

According to one aspect of the present disclosure, the wiring can be protected.

The support frame according to an aspect of the present disclosure is formed in a left-right asymmetrical shape.

According to one aspect of the present disclosure, a degree of freedom in designing the working vehicle can be improved.

The support frame according to one aspect of the present disclosure includes a main body formed of a bar-shaped member, and the main body is bent so as to avoid contact with a muffler.

According to one aspect of the present disclosure, interference between the support frame and the muffler can be avoided.

### ADVANTAGEOUS EFFECTS OF INVENTION

According to one aspect of the present disclosure, the position of the position detection device can be easily changed.

### BRIEF DESCRIPTION OF DRAWINGS

Fig. 1 is a side view illustrating an overall configuration of a tractor according to one aspect of the present disclosure.
Fig. 2 is a perspective view illustrating a cabin, a position detection device, and a support mechanism of the tractor.
Fig. 3 is an enlarged perspective view illustrating a right side portion of the support mechanism.
Fig. 4 is an enlarged perspective view illustrating a left side portion of the support mechanism.
Fig. 5 is a plan view illustrating the position detection device and the support mechanism.
Fig. 6 is an exploded perspective view illustrating the position detection device and the support mechanism.
Fig. 7 is an enlarged exploded perspective view illustrating a right side portion of the support mechanism.
Fig. 8 is an enlarged exploded perspective view illustrating a left side portion of the support mechanism.
Fig. 9 is a left side view illustrating the position detection device and the support mechanism at a use position.
Fig. 10 is a left side view illustrating the position detection device and the support mechanism at a non-use position.
Fig. 11 is a right side view illustrating a beam, wiring, the position detection device, and the support mechanism.
Fig. 12 is a right side view schematically illustrating a beam takeout port and a support frame.
Fig. 13 is a perspective view illustrating a cabin, a position detection device, and a support mechanism of a tractor according to a modification.

### DESCRIPTION OF EMBODIMENT

In the following description, directions indicated by arrows U, D, F, B, L, and R in the drawings are defined as an upward direction, a downward direction, a forward direction, a backward direction, a left direction, and a right direction, respectively.

First, an overall configuration of a tractor 1 according to an aspect of the present disclosure will be described.

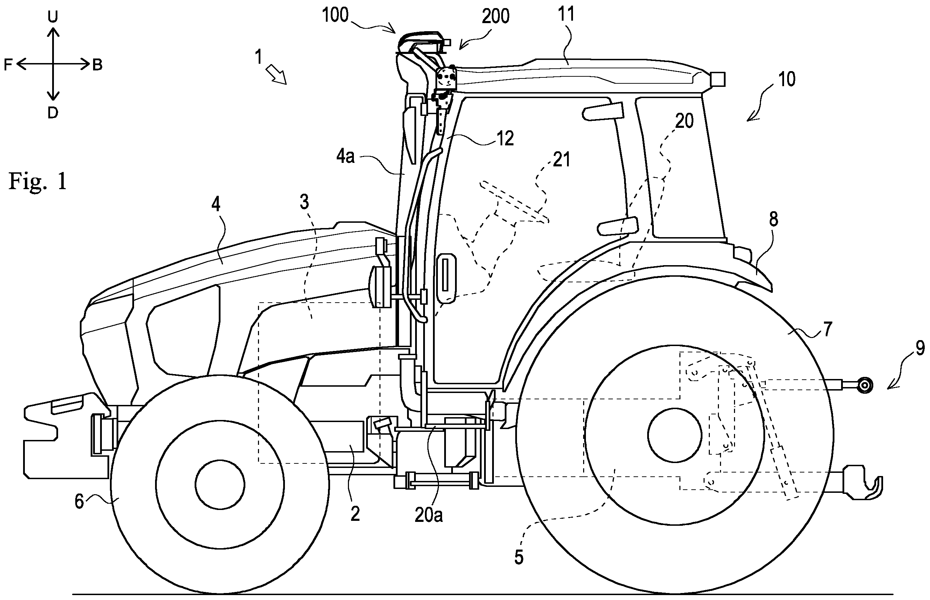

The tractor 1 illustrated in Fig. 1 mainly includes a machine body frame 2, an engine 3, a bonnet 4, a transmission case 5, front wheels 6, rear wheels 7, a fender 8, a lifting device 9, a cabin 10, a seat 20, and a steering wheel 21.

The machine body frame 2 is a frame-shaped member formed by appropriately combining a plurality of panel members. The machine body frame 2 is formed in a substantially rectangular shape in plan view. The machine body frame 2 is disposed at a front portion of the tractor 1 with its longitudinal direction oriented in a front-back direction. The engine 3 is fixed to a back portion of the machine body frame 2. The engine 3 is covered with the bonnet 4. The transmission case 5 is fixed to a back portion of the engine 3. A muffler 4a that discharges exhaust gas of the engine 3 is disposed on a right side of the bonnet 4.

A front portion of the machine body frame 2 is supported by a pair of the left and right front wheels 6 through a front axle mechanism (not illustrated). A back portion of the transmission case 5 is supported by a pair of the left and right rear wheels 7 through a rear axle mechanism (not illustrated). The pair of left and right rear wheels 7 is covered with the fender 8 substantially from above.

The lifting device 9 is provided at a back portion of the transmission case 5. Various working devices (for example, a cultivator or the like) can be attached to the lifting device 9. The lifting device 9 can lift and lower the attached working device by an actuator such as a hydraulic cylinder. Power of the engine 3 can be transmitted to the lifting device 9 through a PTO shaft (not illustrated).

The power of the engine 3 can be transmitted to the front wheels 6 through the front axle mechanism and can be transmitted to the rear wheels 7 through the rear axle mechanism after being shifted by a transmission device (not illustrated) accommodated in the transmission case 5. The front wheels 6 and the rear wheels 7 are rotationally driven by the power of the engine 3, and the tractor 1 can travel. Furthermore, the working device attached to the lifting device 9 can be driven by the power of the engine 3.

The cabin 10 is provided behind the engine 3. The cabin 10 is placed on a vehicle body (such as the transmission case 5). Inside the cabin 10, a living space on which a driver boards is formed.

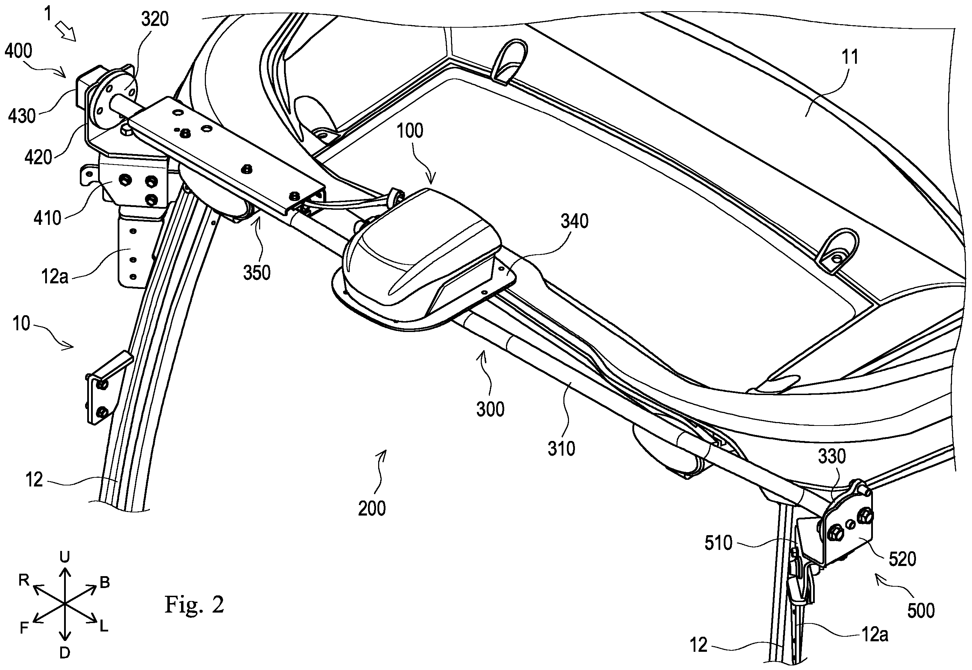

As illustrated in Fig. 2, the cabin 10 includes left and right pillars (front pillars) 12 that support a roof 11 at a front portion. Fixing piece portions 12a for fixing a first coupling portion 400 and a second coupling portion 500 to be described later are provided in middle portions of the left and right pillars 12 in a vertical direction. Each of the fixing piece portions 12a is formed in a substantially plate shape with a thickness direction substantially oriented in the front-back direction.

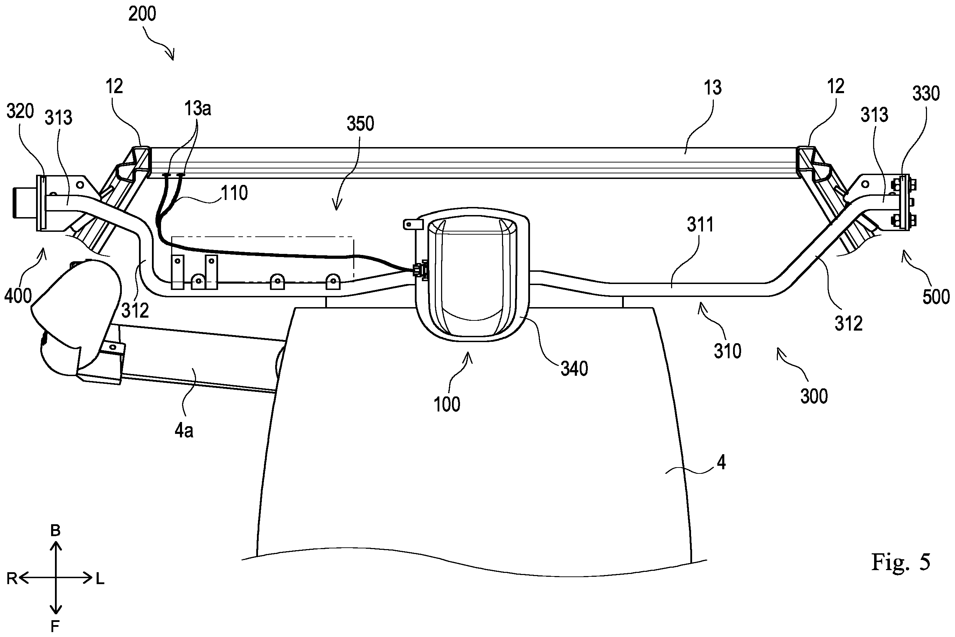

Furthermore, as illustrated in Fig. 5, the cabin 10 includes a beam 13 connecting upper end portions of the left and right pillars 12. Note that, in Fig. 5, the roof 11 and the like of the cabin 10 are not illustrated. A windshield is provided in a frame formed by the beam 13 and the left and right pillars 12. The beam 13 is formed with a takeout port 13a for taking out wiring 110 connected to a position detection device 100 described later from the inside of the cabin 10 to the outside. The takeout port 13a is formed so as to penetrate the beam 13 in the front-back direction. The takeout port 13a is formed in a right side portion of the beam 13. Furthermore, a plurality of (two in the illustrated example) the takeout ports 13a is formed at intervals in a left-right direction.

As illustrated in Fig. 1, the seat 20 on which the driver sits is disposed substantially at a center of the cabin 10. Furthermore, the cabin 10 is provided with an auxiliary step 20a for getting on and off the seat 20. The auxiliary step 20a is installed at least on the left side of the cabin 10. Note that the auxiliary steps 20a can be installed on both sides of the cabin 10. Furthermore, the steering wheel 21 for adjusting a turning angle of the front wheels 6 is disposed in the front portion of the cabin 10.

As illustrated in Fig. 2, the tractor 1 includes the position detection device 100 capable of detecting a position of the vehicle body, and a support mechanism 200 that supports the position detection device 100. Hereinafter, details of the position detection device 100 and the support mechanism 200 will be described with reference to Figs. 2 to 8.

The position detection device 100 illustrated in Fig. 2 is a device capable of detecting a position (position information including latitude and longitude) of the vehicle body using a satellite positioning system such as a GPS. The position detection device 100 is formed in a substantially rectangular parallelepiped box shape. The position detection device 100 includes appropriate reception means for receiving a satellite signal transmitted from a satellite. The position detection device 100 is provided so as to be located outside the cabin 10. Specifically, the position detection device 100 is disposed so as to be located substantially at the center in the left-right direction of the front portion of the roof 11.

As illustrated in Fig. 5, the position detection device 100 is connected to the wiring 110 taken out from the inside of the cabin 10 through the takeout port 13a. In the illustrated example, the wiring 110 is connected to a right portion of the position detection device 100. A plurality of the wiring 110 is provided. The position detection device 100 and an appropriate control device capable of controlling traveling of the tractor 1 can be communicably connected through the wiring 110.

The tractor 1 can execute control for automatically steering the vehicle body based on position information detected by the position detection device 100. The above control includes, for example, control of automatically steering the vehicle body so as to travel straight in parallel to a set predetermined traveling reference line.

The support mechanism 200 is attached to the cabin 10 and supports the position detection device 100. The support mechanism 200 includes a support frame 300, a first coupling portion 400, and a second coupling portion 500.

The support frame 300 illustrated in Figs. 5 to 8 supports the position detection device 100 and is disposed to extend over the left and right pillars 12. The support frame 300 is disposed so as to be located in front of the roof 11. The support frame 300 is rotatably provided with respect to the left and right pillars 12 about center axes (rotation shafts 322 and 336 to be described later) oriented in the left-right direction through the first coupling portion 400 and the second coupling portion 500 described later.

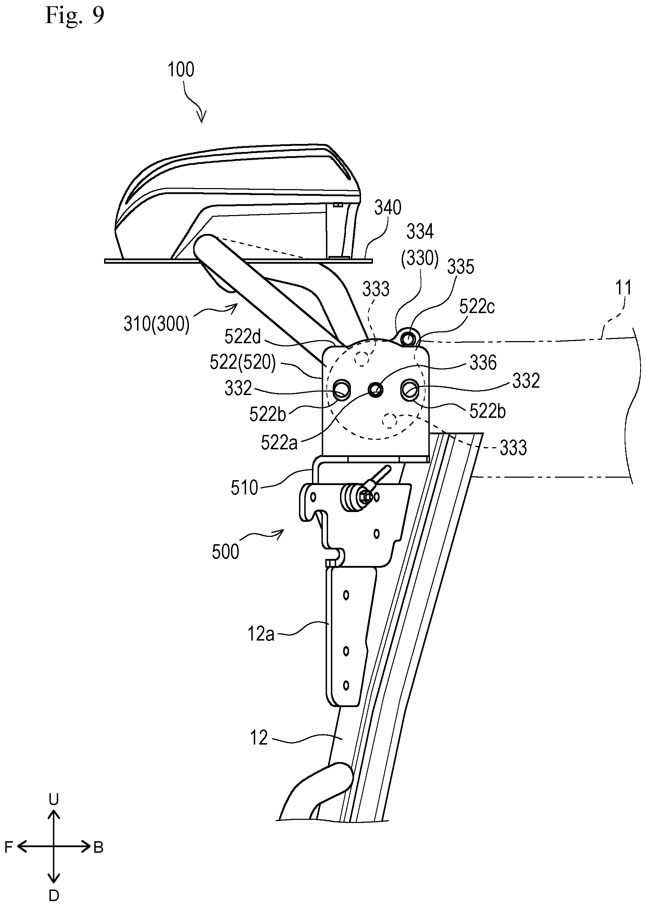

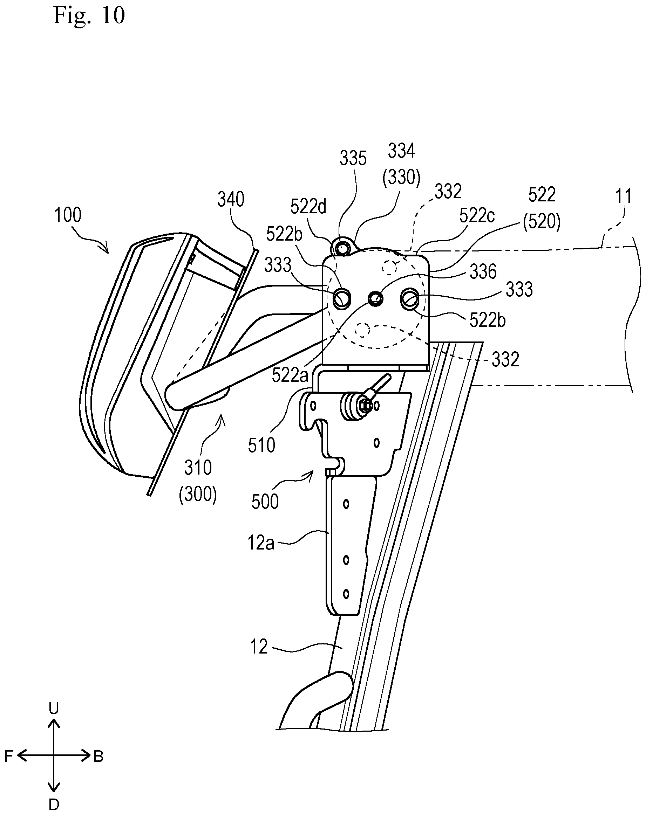

Specifically, the support frame 300 can be rotated between a use position (see Fig. 9) where the position detection device 100 is located above the roof 11 (an upper end portion of the roof 11) and a non-use position (see Fig. 10) where the support frame is rotated in a counterclockwise direction as viewed from the left side from the use position such that the position detection device 100 is located below the roof 11. Note that the rotation operation of the support frame 300 will be described in detail later. Hereinafter, the configuration of the support frame 300 will be described with reference to the use position. The support frame 300 includes a main body 310, a first end portion 320, a second end portion 330, a support plate 340, and a cover portion 350.

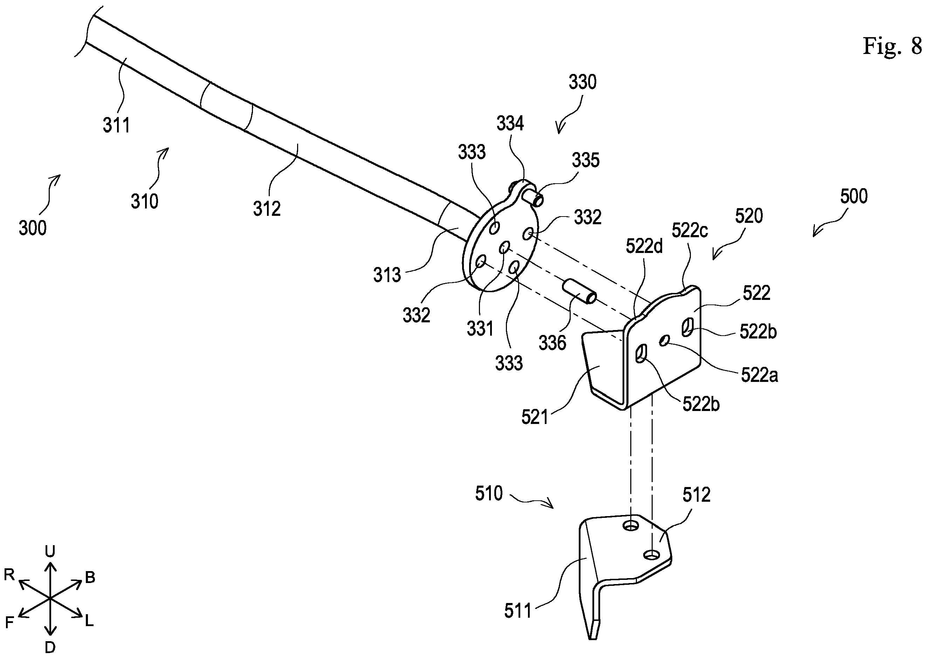

The main body 310 illustrated in Figs. 5 and 8 is a main structural body of the support frame 300. The main body 310 is formed by bending a rod-shaped (round bar-shaped) member elongated in the left-right direction. As the main body 310, for example, a hollow round bar (pipe) can be employed. As illustrated in Fig. 5, the main body 310 is formed such that both end portions in the left-right direction (end portions of a third portion 313 to be described later) are located more outside in the left-right direction than the left and right pillars 12 (portion of each of the pillars 12 at substantially the same height as the support frame 300). The main body 310 includes a first portion 311, a second portion 312, and the third portion 313.

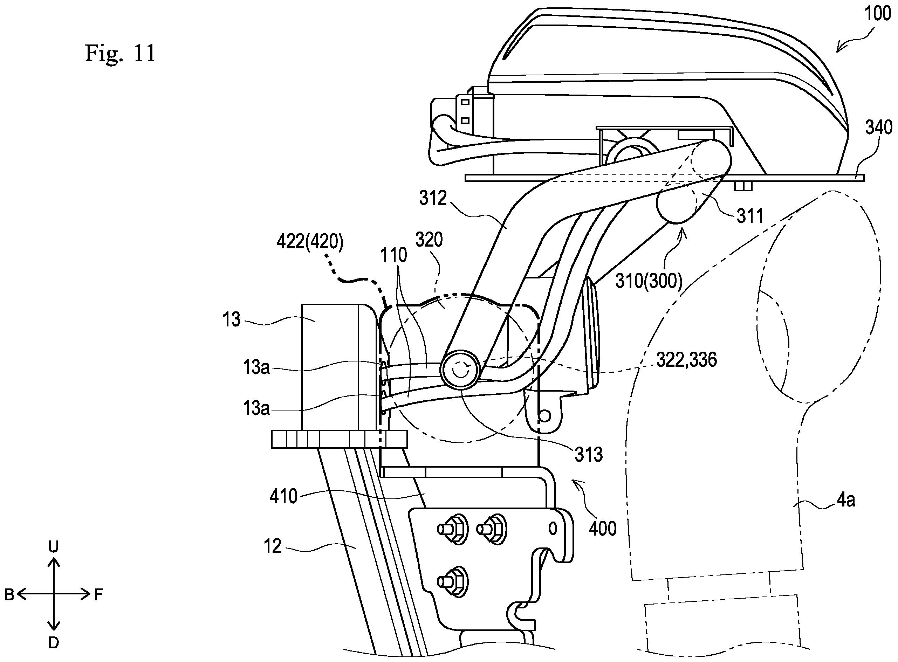

The first portion 311 is a portion on a center side in the left-right direction of the main body 310. The first portion 311 is formed to extend in the left-right direction. As illustrated in Fig. 5, the first portion 311 is formed such that the central portion in the left-right direction is recessed backward in a state where the position detection device 100 is at the use position. More specifically, the first portion 311 is formed such that the central portion in the left-right direction is recessed obliquely backward and downward with respect to both end portions in the left-right direction (see Fig. 11). Furthermore, the first portion 311 is formed in a linear shape except for the central portion in the left-right direction.

The second portion 312 is a portion extending left and right from both end portions in the left-right direction of the first portion 311. The second portion 312 is formed to extend obliquely downward and backward. As illustrated in Fig. 5, in the present embodiment, the second portion 312 on a side of the muffler 4a (right side) of the left and right second portions 312 is bent so as to avoid contact with the muffler 4a. That is, in the present embodiment, the second portion 312 on the right side is formed in a shape bent so as to be recessed toward a side opposite to the muffler 4a (obliquely left back side in plan view). Furthermore, as illustrated in Fig. 11, the second portion 312 on the right side is formed to be recessed obliquely backward and upward in the right side view. Thus, interference between the support frame 300 (second portion 312) and the muffler 4a can be avoided.

The third portion 313 is a portion extending left and right from both end portions in the left-right direction of the second portion 312. The third portion 313 is formed to extend linearly in the left-right direction. The left and right third portions 313 are formed so as to be located substantially coaxially with each other.

As described above, the main body 310 is formed in a left-right asymmetrical shape. Specifically, the main body 310 bends the second portion 312 on the right side so as to avoid contact with the muffler 4a, and does not bend the second portion 312 on the left side and is formed in a linearly extending shape. As described above, in the present embodiment, the shape of the main body 310 (second portion 312) is arbitrarily changed so as to avoid interference with other members. As in the present embodiment, if the left and right third portions 313 of the main body 310 are located substantially coaxially with each other, the shape, size, and the like of the middle portion (the first portion 311 and the second portion 312) can be arbitrarily changed. Accordingly, the degree of freedom in designing the tractor 1 can be improved.

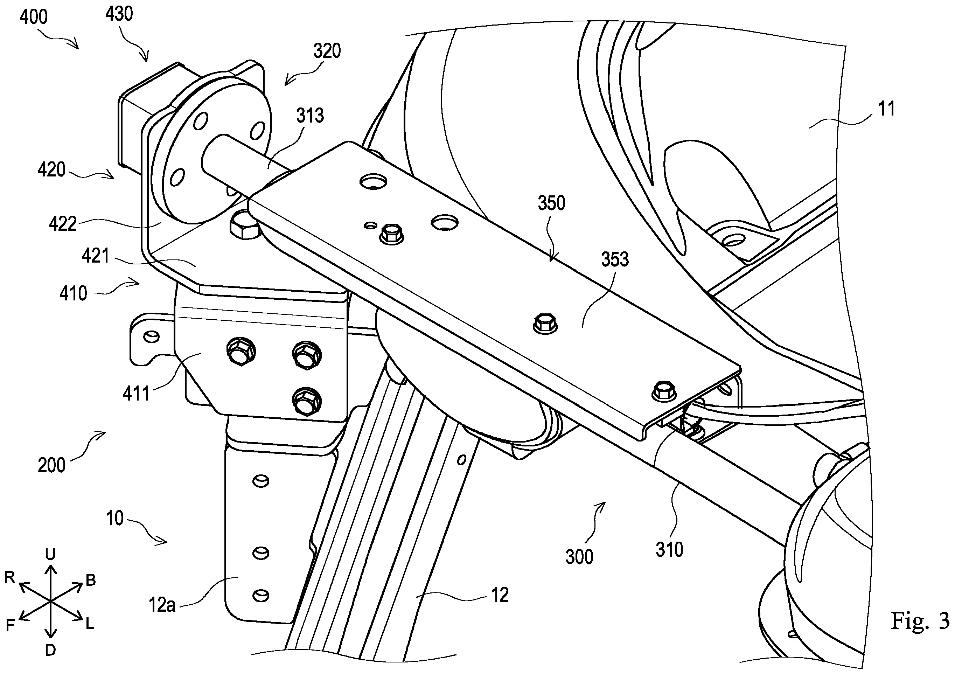

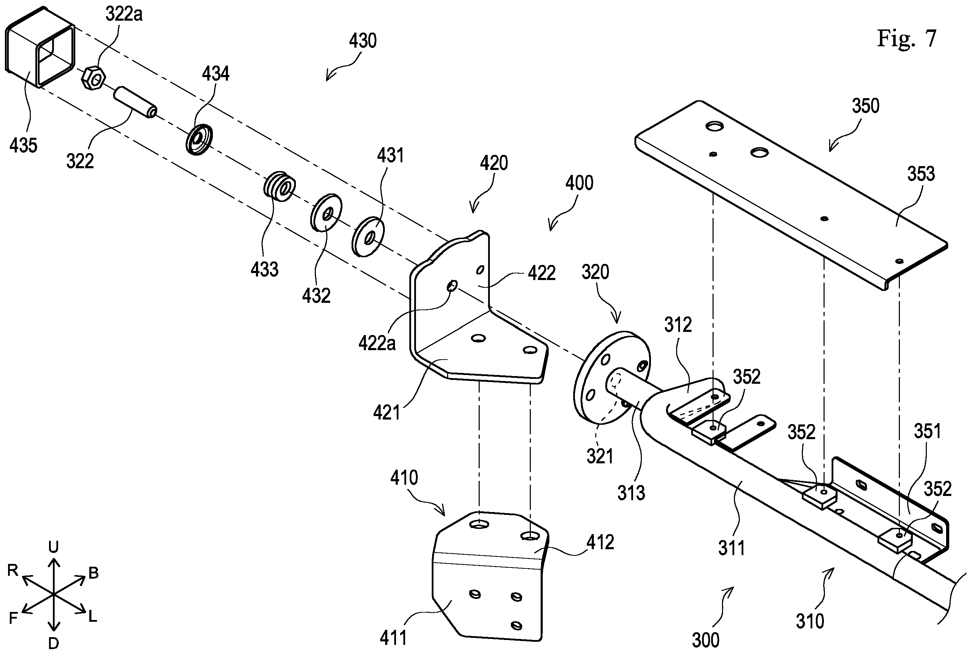

The first end portion 320 illustrated in Figs. 3 and 7 constitutes a right end portion of the support frame 300. The first end portion 320 is formed in a substantially plate shape with a thickness direction oriented in the left-right direction. The first end portion 320 is formed in a substantially circular shape in a side view. The first end portion 320 is fixed to a right end portion of the main body 310 (third portion 313). The first end portion 320 includes a shaft attachment hole 321 and a rotation shaft 322.

The shaft attachment hole 321 is a portion (screw hole) to which the rotation shaft 322 described later is attached. The shaft attachment hole 321 is formed so as to penetrate the first end portion 320 in the left-right direction. The shaft attachment hole 321 is formed at the center of the first end portion 320 in a side view. The shaft attachment hole 321 is formed so as to substantially coincide with the center of the third portion 313 in side view.

The rotation shaft 322 is a rotation center on the right side of the support frame 300. The rotation shaft 322 is disposed with an axial direction oriented in the left-right direction. The rotation shaft 322 is formed of an appropriate bolt (stud bolt). The rotation shaft 322 is fitted into the shaft attachment hole 321.

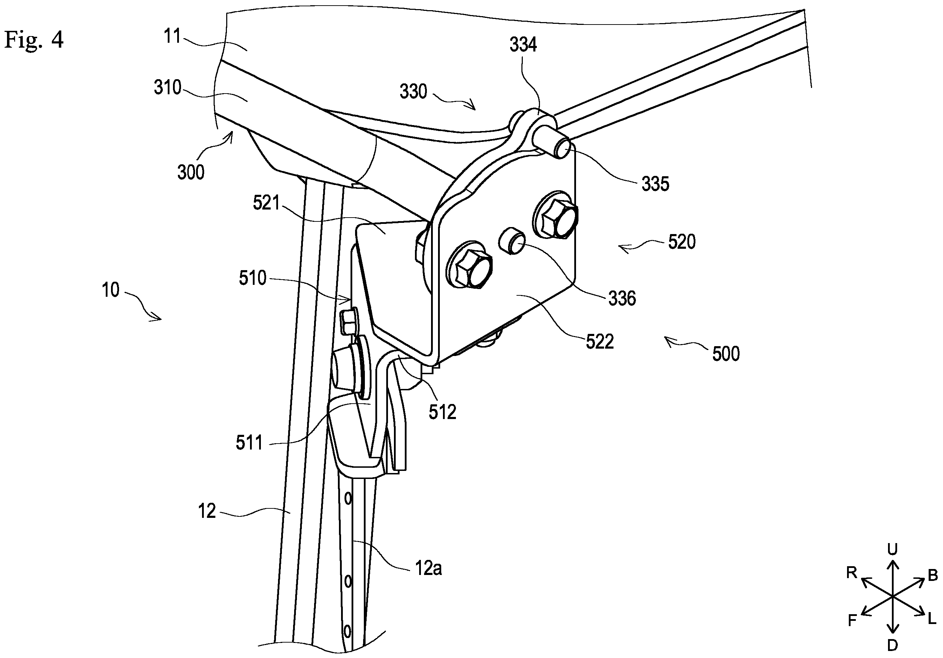

The second end portion 330 illustrated in Figs. 4 and 8 constitutes a left end portion of the support frame 300. The second end portion 330 is formed in a substantially plate shape with a thickness direction oriented in the left-right direction. The second end portion 330 is formed in a substantially circular shape in which a part (a protrusion 334 to be described later) protrudes in a side view. Note that the second end portion 330 is formed in substantially the same shape as the first end portion 320 except that a part thereof protrudes. The second end portion 330 includes a shaft attachment hole 331, a first fixing hole 332, a second fixing hole 333, a protrusion 334, a restriction pin 335, and a rotation shaft 336.

The shaft attachment hole 331 is a portion (screw hole) to which the rotation shaft 336 described later is attached. Since the configuration of the shaft attachment hole 331 is substantially similar to the configuration of the shaft attachment hole 321 of the first end portion 320, a detailed description thereof will be omitted.

The first fixing hole 332 is a portion for fixing the second end portion 330 to the second coupling portion 500 described later when fixing the support frame 300 at the use position. The first fixing hole 332 is formed so as to penetrate the second end portion 330 in the left-right direction. A pair of the second end portions 330 is formed with the shaft attachment hole 331 interposed therebetween.

The second fixing hole 333 is a portion for fixing the second end portion 330 to the second coupling portion 500 described later when fixing the support frame 300 at the non-use position. Similarly to the first fixing hole 332, the second fixing hole 333 is formed so as to penetrate the second end portion 330 in the left-right direction. A pair of the second end portions 330 is formed with the shaft attachment hole 331 interposed therebetween. The first fixing hole 332 and the second fixing hole 333 are formed so as to be aligned on the circumference centered on the shaft attachment hole 331.

The protrusion 334 is a portion that protrudes substantially upward (obliquely upward) from a substantially circular portion of the second end portion 330.

The restriction pin 335 protrudes leftward from a tip end portion of the protrusion 334. The restriction pin 335 is formed in a substantially cylindrical shape with an axial direction oriented in the left-right direction.

The rotation shaft 336 is a left rotation center of the support frame 300. The rotation shaft 336 is disposed with an axial direction oriented in the left-right direction. The rotation shaft 336 is fitted into the shaft attachment hole 331. The rotation shaft 336 is formed to have the same outer diameter as that of the right rotation shaft 322.

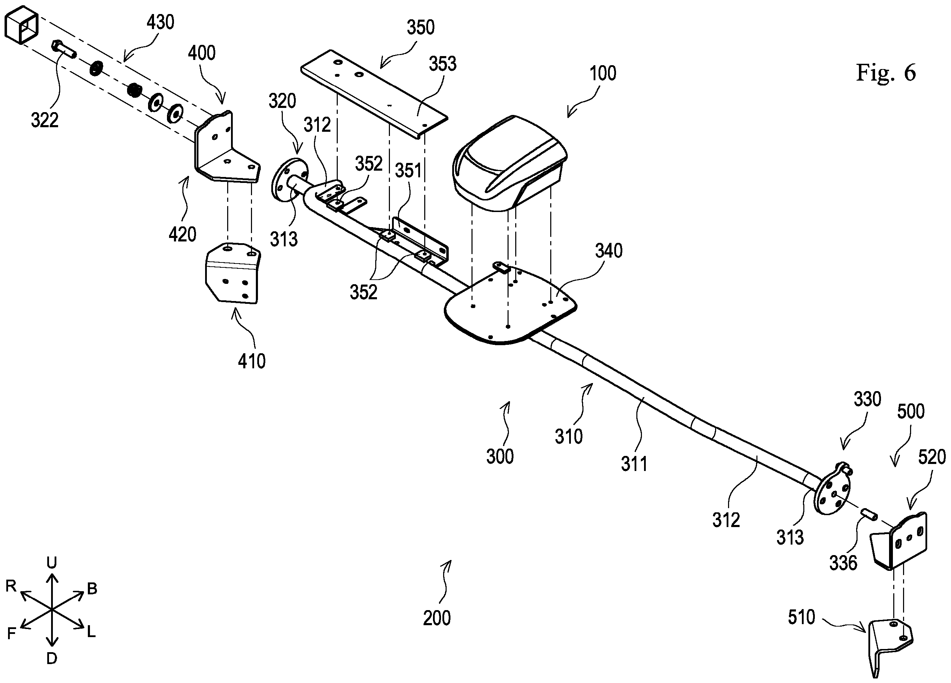

The support plate 340 illustrated in Fig. 6 supports the position detection device 100. The support plate 340 is provided at the center in the left-right direction of the main body 310 (the center in the left-right direction of the first portion 311). The support plate 340 is formed in a substantially plate shape with the thickness direction oriented in the vertical direction in a state where the position detection device 100 is at the use position. The support plate 340 is fixed to the main body 310 by welding, for example. Furthermore, the support plate 340 is fixed to a bottom surface of the position detection device 100 using a fastener such as a bolt.

The cover portion 350 illustrated in Figs. 3 and 7 is provided in the main body 310 and covers at least a part of the wiring 110. The cover portion 350 is formed in a substantially rectangular shape elongated in the left-right direction in plan view. The cover portion 350 is provided on a right side portion of the main body 310. More specifically, the cover portion 350 is provided in a portion of the first portion 311 of the main body 310 on the right side of the support plate 340. Furthermore, the cover portion 350 is provided on the back side of the first portion 311. The cover portion 350 includes a lower cover portion 351, a cover fixing portion 352, and an upper cover portion 353.

The lower cover portion 351 is a portion provided at a lower portion of the main body 310 (first portion 311). The lower cover portion 351 is formed in a substantially plate shape with the thickness direction oriented in the vertical direction in a state where the position detection device 100 is at the use position. More specifically, the lower cover portion 351 is formed in a shape in which a back end portion of a plate-shaped member is bent upward. The lower cover portion 351 is fixed to a lower surface of the first portion 311 by welding, for example.

The cover fixing portion 352 is a portion for fixing the upper cover portion 353 described later. A screw hole through which a fastener such as a bolt can be vertically inserted is formed in the cover fixing portion 352. A plurality of (three in the illustrated example) cover fixing portions 352 are provided on the upper surface of the main body 310 (first portion 311) at intervals in the left-right direction. The cover fixing portion 352 is fixed to an upper surface of the first portion 311 by welding, for example.

The upper cover portion 353 is a portion provided in an upper portion of the main body 310 (first portion 311). The upper cover portion 353 is formed in a substantially plate shape with the thickness direction oriented in the vertical direction in a state where the position detection device 100 is at the use position. The upper cover portion 353 is formed separately from the main body 310. The upper cover portion 353 is attached to the cover fixing portion 352 using a fastener such as a bolt.

The first coupling portion 400 illustrated in Figs. 3 and 7 rotatably couples the right end portion of the support frame 300 to the pillar 12 on the right side. The first coupling portion 400 is provided on the fixing piece portion 12a of the pillar 12 on the right side. The first coupling portion 400 includes a fixing member 410, a support member 420, and a friction force applying mechanism 430.

The fixing member 410 is fixed to the fixing piece portion 12a of the pillar 12, and a support member 420 described later is attached thereto. The fixing member 410 is formed by bending a plate-shaped member into a substantially L shape. The fixing member 410 includes a first fixing piece portion 411 and a second fixing piece portion 412.

The first fixing piece portion 411 is a portion fixed to the fixing piece portion 12a. The first fixing piece portion 411 is formed such that the thickness direction is substantially oriented in the front-back direction. The first fixing piece portion 411 is fixed to the fixing piece portion 12a using a fastener such as a bolt in a state where the back surface abuts on the front surface of the fixing piece portion 12a.

The second fixing piece portion 412 is a portion to which the support member 420 is attached. The second fixing piece portion 412 is formed to extend substantially backward from the upper end portion of the first fixing piece portion 411. The second fixing piece portion 412 is formed such that the thickness direction is substantially oriented in the vertical direction.

The support member 420 is attached to the fixing member 410 and rotatably supports the right end portion of the support frame 300. The support member 420 is formed by bending a plate-shaped member into a substantially L shape. The support member 420 includes a first support piece portion 421 and a second support piece portion 422.

The first support piece portion 421 is a portion fixed to the second fixing piece portion 412 of the fixing member 410. The first support piece portion 421 is formed such that the thickness direction is substantially oriented in the vertical direction. The first support piece portion 421 is fixed to the second fixing piece portion 412 using a fastener such as a bolt in a state where the lower surface is in contact with the upper surface of the second fixing piece portion 412.

The second support piece portion 422 is a part that rotatably supports the right end portion (first end portion 320) of the support frame 300. The second support piece portion 422 is formed to extend upward from the right end portion of the first support piece portion 421. The second support piece portion 422 is formed such that the thickness direction is oriented in the left-right direction. The second support piece portion 422 is formed in a substantially rectangular shape in a side view. The second support piece portion 422 is formed in an arc shape in which the central portion in the left-right direction of the upper end portion protrudes upward. The second support piece portion 422 includes a support hole 422a.

The rotation shaft 322 of the support frame 300 is inserted into the support hole 422a, and the support hole rotatably supports the right end portion of the support frame 300. The support hole 422a is formed so as to penetrate the second support piece portion 422 in the left-right direction. An inner diameter of the support hole 422a is formed to be larger than an outer diameter of the rotation shaft 322. The support hole 422a is formed substantially at the center of the second support piece portion 422 in a side view.

The friction force applying mechanism 430 applies a friction force to the rotation of the support frame 300. The friction force applying mechanism 430 is provided on the right surface side of the second support piece portion 422. The friction force applying mechanism 430 includes a friction plate 431, a washer 432, a spring portion 433, a spring receiving portion 434, and a case 435.

The friction plate 431 is for generating a friction force with the right surface of the second support piece portion 422. The friction plate 431 is formed in a substantially annular shape. The friction plate 431 is externally fitted to the rotation shaft 322.

The washer 432 transmits a biasing force of the spring portion 433 described later to the friction plate 431. The washer 432 is formed in a substantially annular shape. The washer 432 is externally fitted to the rotation shaft 322 and abuts on a right surface of the friction plate 431.

The spring portion 433 biases the washer 432 and the friction plate 431 leftward. The spring portion 433 is formed of a compression coil spring. The spring portion 433 is externally fitted to the rotation shaft 322 and abuts on a left surface of the washer 432.

The spring receiving portion 434 is for receiving the spring portion 433. The spring receiving portion 434 is formed in a substantially annular shape. The spring receiving portion 434 is externally fitted to the rotation shaft 322 and abuts on a right surface of the spring portion 433. Furthermore, the spring receiving portion 434 is held by the rotation shaft 322 by a nut 322a fastened to the rotation shaft 322. By appropriately changing the fastening position of the nut 322a, the friction force applied when the support frame 300 rotates can be adjusted.

The case 435 covers other members (friction plate 431, washer 432, spring portion 433, spring receiving portion 434) constituting the friction force applying mechanism 430 and the rotation shaft 322. The case 435 is formed in a substantially box shape that opens leftward.

The second coupling portion 500 illustrated in Figs. 4 and 8 rotatably couples the left end portion of the support frame 300 to the pillar 12 on the left side. The second coupling portion 500 is provided on the fixing piece portion 12a of the pillar 12 on the left side. The second coupling portion 500 includes a fixing member 510 and a support member 520.

The fixing member 510 is fixed to the fixing piece portion 12a of the pillar 12, and the support member 520 described later is attached thereto. The fixing member 510 includes a first fixing piece portion 511 and a second fixing piece portion 512. Note that the fixing member 510 (the first fixing piece portion 511 and the second fixing piece portion 512) is substantially the same as the fixing member 410 (the first fixing piece portion 411 and the second fixing piece portion 412) except that the fixing member is formed in a symmetrical shape in the left-right direction, and thus a detailed description thereof will be omitted.

The support member 520 is attached to the fixing member 510 and rotatably supports the left end portion of the support frame 300. The support member 420 is formed by bending a plate-shaped member into a substantially L shape. The support member 520 includes a first support piece portion 521 and a second support piece portion 522.

The first support piece portion 521 is a portion fixed to the second fixing piece portion 512 of the fixing member 510. The first support piece portion 521 is formed such that the thickness direction is substantially oriented in the vertical direction. The first support piece portion 521 is fixed to the second fixing piece portion 512 using a fastener such as a bolt in a state where the lower surface is in contact with the upper surface of the second fixing piece portion 512.

The second support piece portion 522 rotatably supports the left end portion (second end portion 330) of the support frame 300. The second support piece portion 522 is formed to extend upward from the left end portion of the first support piece portion 521. The second support piece portion 522 is formed such that the thickness direction is oriented in the left-right direction. The second support piece portion 522 is formed in a substantially rectangular shape in a side view. The second support piece portion 522 protrudes upward by forming the central portion in the left-right direction of the upper end portion in an arc shape centered on the support hole 522a. The second support piece portion 522 includes a support hole 522a, a fixing hole 522b, a first restriction portion 522c, and a second restriction portion 522d.

The rotation shaft 336 of the support frame 300 is inserted into the support hole 522a, and the left end portion of the support frame 300 is rotatably supported by the support hole. The support hole 522a is formed so as to penetrate the second support piece portion 522 in the left-right direction. The support hole 522a is formed substantially at the center of the second support piece portion 522 in a side view. An inner diameter of the support hole 522a is formed to be larger than an inner diameter of the support hole 422a of the first coupling portion 400. As a result, a gap between the support hole 422a and the rotation shaft 322 inserted through the support hole 422a is larger than a gap between the support hole 522a and the rotation shaft 336 inserted through the support hole 522a.

The fixing hole 522b is a portion used when the support frame 300 (second end portion 330) is fixed at the use position or the non-use position. A pair of the fixing holes 522b is formed so as to overlap each of a pair of the first fixing holes 332 of the support frame 300 (second end portion 330) at the use position and to overlap each of a pair of the second fixing holes 333 of the support frame 300 (second end portion 330) at the non-use position in side view (see Figs. 9 and 10). The pair of fixing holes 522b is formed in a long hole shape extending along the circumference of a circle having the rotation center of the support frame 300 (the axis of the rotation shaft 336) as a circular center. The support frame 300 at the use position or the non-use position and the support member 520 are fixed by fixing bolts and nuts inserted through the fixing hole 522b and the first fixing hole 332 or the second fixing hole 333.

The first restriction portion 522c restricts the rotation of the support frame 300 at the use position. The first restriction portion 522c is formed on an upper surface of a back portion (a portion behind the arc-shaped portion) of the second support piece portion 522. When the restriction pin 335 of the support frame 300 abuts on the first restriction portion 522c, further rotation of the support frame 300 at the use position in the clockwise direction in the left side view is restricted (see Fig. 9).

The second restriction portion 522d restricts the rotation of the support frame 300 at the non-use position. The second restriction portion 522d is formed on an upper surface of a front portion (a portion behind the arc-shaped portion) of the second support piece portion 522. When the restriction pin 335 of the support frame 300 abuts on the second restriction portion 522d, further rotation of the support frame 300 at the non-use position in the counterclockwise direction in the left side view is restricted (see Fig. 10).

Next, an operation of changing the position detection device 100 to the use position and the non-use position by rotating the support mechanism 200 (support frame 300) will be described with reference to Figs. 9 and 10.

First, an operation of changing the position detection device 100 of the use position to the non-use position will be described.

Fig. 9 illustrates a state in which the position detection device 100 is located at the use position. In this state, the second end portion 330 of the support frame 300 at the use position is fixed to the second coupling portion 500 with a fixing bolt and a nut. Note that, in Figs. 9 and 10, the bolt and the nut are not illustrated.

In the state of being located at the use position, the upper end portion of the position detection device 100 fixed to the support frame 300 is located above the upper end portion (highest portion) of the roof 11 of the cabin 10 (see Fig. 1). At the use position, the support mechanism 200 can support the position detection device 100 at a position (posture) at which the position of the vehicle body can be suitably detected.

When the position detection device 100 is changed to the non-use position, the worker first removes the bolt and the nut fixing the second end portion 330 of the support frame 300 to the second coupling portion 500. As a result, the support frame 300 is allowed to rotate to the non-use position.

Next, the worker stands on the left side of the cabin 10 (the side on which the restriction pin 335 and the like are provided) and grips the left side portion (for example, the second portion 312) of the support frame 300. Since the support frame 300 extends leftward from the pillars 12, the worker can easily grip the support frame 300 from the side (left side) of the cabin 10.

Next, the worker rotates the held support frame 300 to the non-use position. At this time, a friction force by the friction force applying mechanism 430 is applied to the support frame 300. As a result, it is possible to suppress the rotation (unintended rotation) of the support frame 300 due to its own weight. With the rotation of the support frame 300, the restriction pin 335 moves along the arc-shaped portion of the second support piece portion 522.

Furthermore, as the support frame 300 rotates, the first end portion 320 and the second end portion 330 slide with respect to the second support piece portion 422 and the second support piece portion 522, respectively. In the present embodiment, since the first end portion 320 and the second end portion 330 are formed in a substantially circular shape in the side view, the sliding surfaces of the second support piece portion 422 and the second support piece portion 522 are always covered by the first end portion 320 and the second end portion 330 (regardless of the rotation position of the support frame 300), unlike the case where each end portion is formed in a different shape (other than a circular shape). As a result, even in a case where the coating of the second support piece portion 422 and the second support piece portion 522 is peeled off along with the sliding of the first end portion 320 and the second end portion 330, it is possible to make the portion where the coating is peeled off less noticeable.

As illustrated in Fig. 10, when the support frame 300 is rotated to the non-use position, the restriction pin 335 of the support frame 300 abuts on the second restriction portion 522d of the support member 420, so that further rotation of the support frame 300 at the non-use position in the counterclockwise direction in the left side view is restricted.

In the present embodiment, operability of rotating of the support frame 300 can be improved by operating the support frame 300 from the left side. That is, since the restriction pin 335, the first restriction portion 522c, and the second restriction portion 522d are provided on the left side of the support frame 300, when the support frame 300 is operated from the left side, it is easy to visually confirm the contact of the restriction pin 335 with the first restriction portion 522c and the second restriction portion 522d.

Next, the worker fixes the second end portion 330 of the support frame 300 at the non-use position to the second coupling portion 500 using a bolt and a nut. As a result, the position change of the position detection device 100 to the non-use position is completed.

Fig. 10 illustrates a state in which the position detection device 100 is located at the non-use position. In the state of being located at the non-use position, the upper end portion of the position detection device 100 fixed to the support frame 300 is located below the upper end portion of the roof 11 of the cabin 10. At the non-use position, the support mechanism 200 can support the position detection device 100 so as to downsize the tractor 1 in the vertical direction. This facilitates accommodation and transportation of the tractor 1 in a garage or the like.

Next, an operation of changing the position detection device 100 at the non-use position to the use position will be described.

First, the worker removes the bolt and the nut fixing the second end portion 330 of the support frame 300 to the second coupling portion 500. As a result, the support frame 300 is allowed to rotate to the use position.

Next, the worker grips the main body 310 (for example, the second portion 312) of the support frame 300 and rotates the support frame 300 to the use position. Also at this time, the friction force by the friction force applying mechanism 430 is applied to the support frame 300.

As illustrated in Fig. 9, when the support frame 300 is rotated to the use position, the restriction pin 335 of the support frame 300 abuts on the first restriction portion 522c of the support member 420, so that further rotation of the support frame 300 at the use position in the clockwise direction in the left side view is restricted.

Next, the worker fixes the second end portion 330 of the support frame 300 at the use position to the second coupling portion 500 using a bolt and a nut. As a result, the position change of the position detection device 100 to the use position is completed.

In the present embodiment, since only the left side (the second end portion 330 and the second coupling portion 500) of the support frame 300 is fixed with the bolt and the nut, a series of operations for rotating the support frame 300 can be performed only on the left side. As a result, it is not necessary for the worker to move and fix the support frame 300 to both the left and right sides, and the burden of work can be reduced. Furthermore, it is possible to prevent forgetting to fix one of the left and right.

Furthermore, in the present embodiment, the fixing hole (first fixing hole 332) for the use position and the fixing hole (second fixing hole 333) for the non-use position are formed in the second end portion 330, and the fixing hole (fixing hole 522b) common to the use position and the non-use position is formed in the second support piece portion 522. As a result, unlike the case where the fixing holes for the use position and the non-use position are formed on the second support piece portion 522 side, the fixing positions of the bolt and the nut are common between the use position and the non-use position. According to this, the workability of the fixing work of the bolt and the nut can be improved.

Furthermore, a relationship between the wiring 110 of the position detection device 100, the takeout port 13a of the cabin 10, and the support frame 300 will be described below with reference to Figs. 5, 11, and 12.

As illustrated in Fig. 5, the wiring 110 taken out to the outside of the cabin 10 through the takeout port 13a of the beam 13 is disposed along the main body 310 (first portion 311) of the support frame 300 and connected to the right portion of the position detection device 100. Note that the wiring 110 can be fixed to the main body 310 using an appropriate binding band or the like.

In the cover portion 350 of the support frame 300, a space penetrating in the left-right direction is formed by the lower cover portion 351 and the upper cover portion 353. The cover portion 350 can protect the wiring 110 disposed along the main body 310 (first portion 311) by covering the wiring from above or inserting the wiring into the space.

Furthermore, as illustrated in Fig. 11, the takeout port 13a is disposed in the vicinity of the rotation shafts 322 and 336 of the support frame 300. Specifically, in the side view, the takeout port 13a and the rotation shafts 322 and 336 are disposed at positions where at least a part thereof overlaps the support member 420 (second support piece portion 422) of the second coupling portion 500.

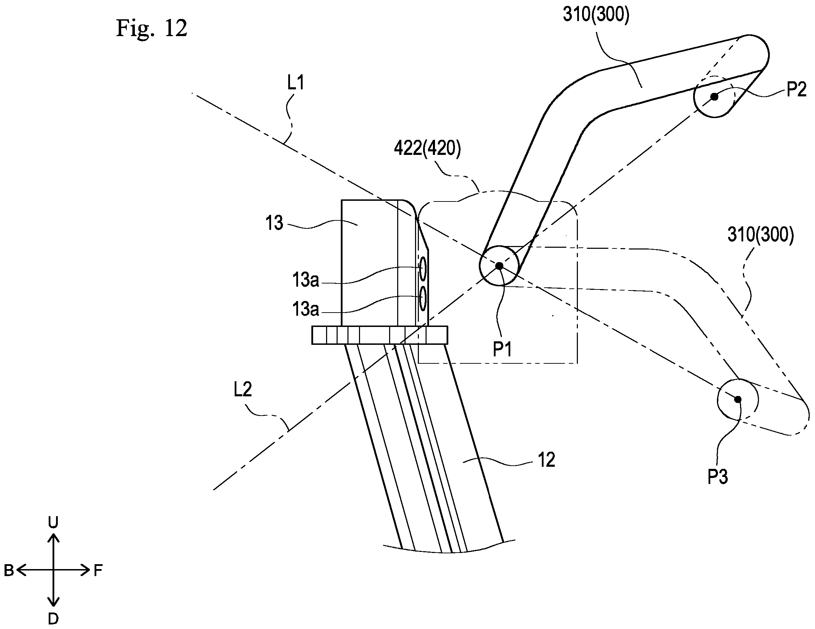

Furthermore, in Fig. 12, an imaginary line L1 connecting an axis P1 of the rotation shafts 322 and 336 and a center P2 of the first portion 311 (the center portion of the first portion 311 in the left-right direction) of the support frame 300 at the use position in a side view is illustrated. Furthermore, an imaginary line L2 connecting the axis P1 and a side view center P3 of the first portion 311 of the support frame 300 at the non-use position is illustrated. In the present embodiment, the takeout port 13a is disposed so as to be located in a region between the imaginary line L1 and the imaginary line L2 behind the axis P1 in a side view (right side view).

As a result, it is possible to suppress application of a load to the wiring 110 in accordance with the change of the position of the position detection device 100. That is, by setting the takeout port 13a of the wiring 110 in the vicinity of the rotation shafts 322 and 336 of the support frame 300, it is possible to prevent an excessive tension from being applied to the wiring 110 in accordance with the rotation of the support frame 300.

As described above, the tractor 1 (working vehicle) according to the present embodiment includes:
a position detection device 100 capable of detecting a position of a vehicle body;
a support frame 300 that supports the position detection device 100 and is disposed to extend over left and right pillars 12 of a cabin 10; and
a coupling portion (first coupling portion 400, second coupling portion 500) that rotatably couples the support frame 300 to each of the left and right pillars 12.

With this configuration, the position of the position detection device 100 can be easily changed. That is, by disposing the support frame 300 so as to extend over the left and right pillars 12 of the cabin 10, the support frame 300 can be easily touched from the side of the cabin 10, and the work of rotating the support frame 300 (changing the position of the position detection device 100) can be easily performed.

Furthermore, the support frame 300 is disposed such that both ends of the support frame are located outside the left and right pillars 12.

With this configuration, the position of the position detection device 100 can be easily changed. That is, by disposing the support frame 300 such that both ends of the support frame are located outside the left and right pillars 12, the work of rotating the support frame 300 is more easily performed.

Furthermore, the coupling portion includes:
fixing members 410 and 510 fixed to the pillars 12; and
support members 420 and 520 attached to the fixing members 410 and 510 and rotatably supporting the support frame 300.

With such a configuration, the support frame 300 can be easily rotated. That is, by dividing the coupling portion (first coupling portion 400, second coupling portion 500) into the fixing members 410 and 510 and the support members 420 and 520, attachment positions of the support members 420 and 520 with respect to the fixing members 410 and 510 can be finely adjusted. The support frame 300 can be easily rotated by finely adjusting the attachment positions of the support members 420 and 520 according to the deviation of the axial centers of the both end portions of the support frame 300 across the left and right of the cabin 10.

Furthermore, the coupling portion includes:
a first coupling portion 400 that rotatably couples one end portion of the support frame 300 to one of the left and right pillars 12; and
a second coupling portion 500 that rotatably couples another end portion of the support frame 300 to another of the left and right pillars 12,
the first coupling portion 400 includes
a first support hole (support hole 422a) through which the one end portion of the support frame 300 is inserted and that rotatably supports the one end portion of the support frame 300, and
the second coupling portion 500 includes
a second support hole (support hole 522a) having an inner diameter larger than an inner diameter of the first support hole (support hole 422a), through which the another end portion of the support frame 300 is inserted, and that rotatably supports the another end portion of the support frame 300.

With such a configuration, the support frame 300 can be easily rotated. That is, by forming the inner diameter of the second support hole (support hole 522a) to be larger than the inner diameter of the first support hole (support hole 422a), it is possible to allow the axial centers of both end portions of the support frame 300 across the left and right of the cabin 10 to deviate from each other and to facilitate the rotation of the support frame 300.

Furthermore, a friction force applying mechanism 430 that is provided in the coupling portion (first coupling portion 400, second coupling portion 500) and applies a friction force to the rotation of the support frame 300 is provided.

With this configuration, the position of the position detection device 100 can be easily adjusted. That is, by applying a friction force to the rotation of the support frame 300, it is possible to suppress the rotation (unintended rotation) of the support frame 300 due to its own weight.

Furthermore, the friction force applying mechanism 430 is provided only in the first coupling portion 400 of the first coupling portion 400 and the second coupling portion 500.

With such a configuration, the friction force can be suitably applied. That is, out of the first coupling portion 400 and the second coupling portion 500, the friction force applying mechanism 430 is provided in the first coupling portion 400 in which the inner diameter of the first support hole (support hole 422a) is formed to be relatively small. Thus, on a side where the friction force applying mechanism 430 is provided, the support frame 300 can be accurately rotated by the first support hole (support hole 422a) having a relatively small inner diameter. According to this, it is possible to suppress a shaft from shaking on the side where the friction force applying mechanism 430 is provided and to suitably apply the friction force.

Furthermore, a restriction portion (first restriction portion 522c, second restriction portion 522d) that is provided only in the second coupling portion 500 of the first coupling portion 400 and the second coupling portion 500 and restricts rotation of the support frame 300 at a predetermined position is provided.

With this configuration, the position of the position detection device 100 can be easily adjusted. That is, by restricting the rotation of the support frame 300 at a predetermined position, the position detection device 100 can be easily adjusted to a predetermined position. Furthermore, for example, unlike the case where the restriction portions (first restriction portion 522c, second restriction portion 522d) are provided on both left and right sides, it is possible to prevent restriction positions of the support frame 300 from being shifted due to positions of the left and right restriction portions being shifted from each other.

In the present embodiment, a restriction portion (first restriction portion 522c, second restriction portion 522d) is provided on a left side on which a worker performs an operation. As a result, when the worker operates the support frame 300, it is easy to visually confirm the contact of a restriction pin 335 with the first restriction portion 522c and the second restriction portion 522d.

Furthermore, the tractor 1 (working vehicle) further includes
a takeout port 13a that is provided in the cabin 10 and through which wiring 110 connected to the position detection device 100 is taken out from an inside to an outside of the cabin 10, and
the takeout port 13a is disposed in a vicinity of rotation shafts 322 and 336 of the support frame 300.

With such a configuration, it is possible to suppress application of a load to the wiring 110 in accordance with a change in position of the position detection device 100. That is, by setting the takeout port 13a of the wiring 110 in the vicinity of the rotation shafts 322 and 336 of the support frame 300, it is possible to prevent an excessive tension from being applied to the wiring 110 in accordance with the rotation of the support frame 300.

Furthermore, a cover member (cover portion 350) that is provided on the support frame 300 and covers at least a part of the wiring 110 is provided.

With such a configuration, the wiring 110 can be protected.

Furthermore, the support frame 300 is formed in a left-right asymmetrical shape.

With this configuration, a degree of freedom in designing the working vehicle (tractor 1) can be improved. That is, the shape of the support frame 300 can be arbitrarily changed so as to avoid interference with other members.

Furthermore, the support frame 300 includes a main body 310 formed of a bar-shaped member, and
the main body 310 is bent to avoid contact with a muffler 4a.

With such a configuration, interference between the support frame 300 and the muffler 4a can be avoided.

Note that the tractor 1 according to the present embodiment is one embodiment of the working vehicle according to the present invention.

Furthermore, the support hole 422a according to the present embodiment is one form of the first support hole according to the present invention.

Furthermore, the support hole 522a according to the present embodiment is one form of the second support hole according to the present invention.

Furthermore, the first restriction portion 522c and the second restriction portion 522d according to the present embodiment are one form of the restriction portion according to the present invention.

Furthermore, the cover portion 350 according to the present embodiment is one form of the cover member according to the present invention.

Although the embodiment of the present invention has been described above, the present invention is not limited to the above configurations, and various modifications can be made within the scope of the inventions described in the claims.

For example, in the above embodiment, an example in which both ends of the support frame 300 are disposed so as to be positioned outside the left and right pillars 12 has been described, but the present invention is not limited to such an aspect. For example, both the ends of the support frame 300 may be disposed so as to be located inside the left and right pillars 12 (for example, in the vicinity of the left and right pillars 12).

Furthermore, in the above embodiment, the example in which the first coupling portion 400 and the second coupling portion 500 are formed of the fixing members 410 and 510 and the support members 420 and 520 which are separate members from each other has been described, but the present invention is not limited to such an aspect. For example, the fixing members 410 and 510 and the support members 420 and 520 may be integrally formed.

Furthermore, in the above embodiment, the example in which the inner diameter of the support hole 522a of the second coupling portion 500 is formed to be larger than the inner diameter of the support hole 422a of the first coupling portion 400 has been described, but the present invention is not limited to such an aspect. For example, the inner diameters of the support hole 422a and the support hole 522a may be formed to be equal to each other. Furthermore, the inner diameter of the support hole 422a of the first coupling portion 400 may be formed to be larger than the inner diameter of the support hole 522a of the second coupling portion 500.

Furthermore, in the above embodiment, an example in which the friction force applying mechanism 430 is provided only on the right first coupling portion 400 of the support mechanism 200 has been described, but the present invention is not limited to such an aspect. For example, the friction force applying mechanism 430 may be provided only on the second coupling portion 500 on the left side. As described above, in a case where the friction force applying mechanism 430 is provided only on the side (left side) on which the worker performs the rotation operation, the right side of the support frame 300 (where the friction force applying mechanism 430 is not provided) can be made to easily follow the rotation operation on the left side of the support frame 300. Accordingly, it is possible to suppress the occurrence of a difference in the rotation of both end portions of the support frame 300. Furthermore, the friction force applying mechanism 430 may not be provided in either of the first coupling portion 400 and the second coupling portion 500.

Furthermore, in the above embodiment, the example in which the first restriction portion 522c and the second restriction portion 522d are provided only in the second coupling portion 500 on the left side in the support mechanism 200 has been described, but the present invention is not limited to such an aspect. For example, the first restriction portion 522c and the second restriction portion 522d may be provided only in the first coupling portion 400, and the first restriction portion 522c and the second restriction portion 522d may be provided in both the first coupling portion 400 and the second coupling portion 500. In this case, the protrusion 334 and the restriction pin 335 are also provided in the first end portion 320. Furthermore, neither the first coupling portion 400 nor the second coupling portion 500 may be provided with the first restriction portion 522c and the second restriction portion 522d. In this case, the protrusion 334 and the restriction pin 335 are not provided at the second end portion 330.

Furthermore, in the above embodiment, the example in which the takeout port 13a of the wiring 110 is disposed in the vicinity of the rotation shafts 322 and 336 of the support frame 300 has been described, but the present invention is not limited to such an aspect. The takeout port 13a of the wiring 110 can be disposed at any position in the cabin 10.

Furthermore, in the above embodiment, the example in which the main body 310 of the support frame 300 is bent so as to avoid contact with the muffler 4a has been described, but the present invention is not limited to such an aspect. For example, the main body 310 may not be bent as described above. In this case, the support frame 300 (main body 310) may be formed in a left-right symmetrical shape.

Furthermore, in the above embodiment, the fixing hole (first fixing hole 332) for the use position and the fixing hole (second fixing hole 333) for the non-use position are formed in the second end portion 330, and the common fixing hole (fixing hole 522b) is formed in the second support piece portion 522 at the use position and the non-use position. However, the present invention is not limited to such an aspect. For example, a common fixing hole may be formed in the second end portion 330, and a fixing hole for the use position and a fixing hole for the non-use position may be formed, respectively, in the second support piece portion 522.

Furthermore, in the above embodiment, only the left side (the second end portion 330 and the second coupling portion 500) of the support frame 300 is fixed with the bolt and the nut, but the present invention is not limited to such an aspect. For example, both sides (the first end portion 320 and the second end portion 330) of the support frame 300 may be fixed to the first coupling portion 400 and the second coupling portion 500 with bolts and nuts. Alternatively, only the right side of the support frame 300 (the first end portion 320 and the first coupling portion 400) may be fixed with bolts and nuts.

Furthermore, in the above embodiment, the first end portion 320 and the second end portion 330 of the support frame 300 are formed in a substantially circular shape, but the present invention is not limited to such an aspect. For example, the first end portion 320 and the second end portion 330 may be formed in a deformed shape (for example, a polygonal shape).

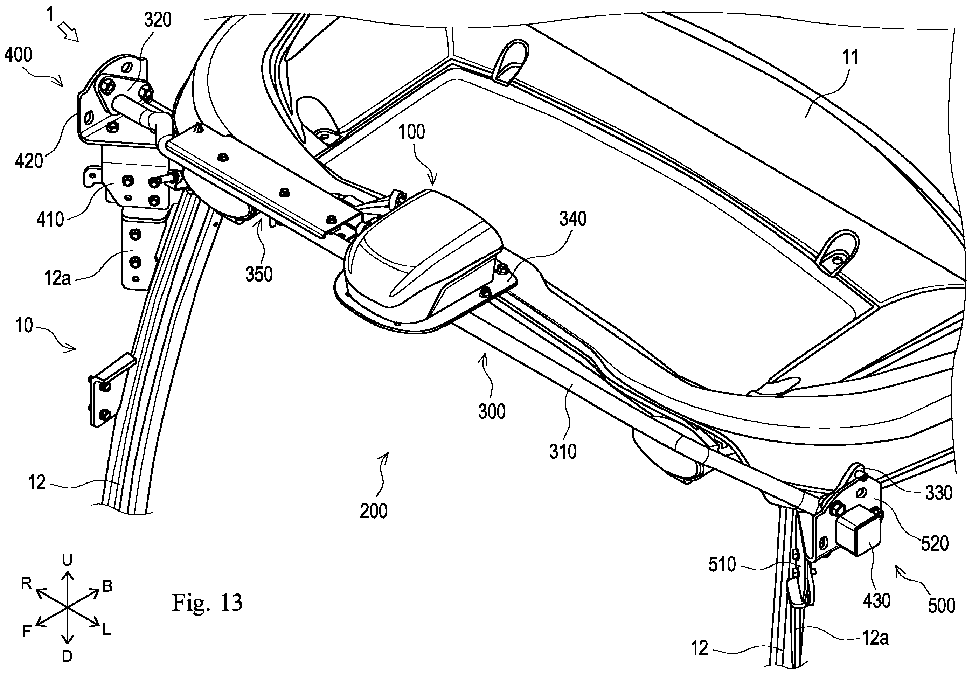

Fig. 13 illustrates another aspect (modification) of the present disclosure. In the modification, unlike the present embodiment (see Fig. 2 and the like), the friction force applying mechanism 430 is provided only in the second coupling portion 500 on the left side. Furthermore, in the modification, unlike the present embodiment (see Fig. 2 and the like), the first end portion 320 and the second end portion 330 of the support frame 300 are formed in a substantially polygonal shape (substantially triangular shape or the like). Furthermore, in the modification, unlike the present embodiment (see Fig. 2 and the like), both sides (the first end portion 320 and the second end portion 330) of the support frame 300 are fixed to the first coupling portion 400 and the second coupling portion 500 by bolts and nuts.

Furthermore, in the above embodiment, the tractor 1 has been exemplified as the working vehicle, but the present invention is not limited to such an aspect. The working vehicle may be another agricultural vehicle, a construction vehicle, an industrial vehicle, or the like.

### INDUSTRIAL APPLICABILITY

The present invention can be applied to a working vehicle.

### REFERENCE SIGNS LIST

1: Tractor
100: Position detection device
300: Support frame
400: First coupling portion
500: Second coupling portion

## Claims

1. A working vehicle comprising:
a position detection device capable of detecting a position of a vehicle body;
a support frame that supports the position detection device and is disposed to extend over left and right pillars of a cabin; and
a coupling portion that rotatably couples the support frame to each of the left and right pillars.

2. The working vehicle according to claim 1, wherein
the support frame is disposed such that both ends of the support frame are located outside the left and right pillars.

3. The working vehicle according to claim 2, wherein
the coupling portion includes:
a fixing member fixed to each of the pillars; and
a support member attached to the fixing member and rotatably supporting the support frame.

4. The working vehicle according to claim 3, wherein
the coupling portion includes:
a first coupling portion that rotatably couples one end portion of the support frame to one of the left and right pillars; and
a second coupling portion that rotatably couples another end portion of the support frame to another of the left and right pillars,
the first coupling portion includes
a first support hole through which the one end portion of the support frame is inserted and that rotatably supports the one end portion of the support frame, and
the second coupling portion includes
a second support hole through which the another end portion of the support frame is inserted and that rotatably supports the another end portion of the support frame, the second support hole having an inner diameter larger than an inner diameter of the first support hole.

5. The working vehicle according to claim 4, further comprising
a friction force applying mechanism that is provided in the coupling portion and applies a friction force to rotation of the support frame.

6. The working vehicle according to claim 5, wherein
the friction force applying mechanism is provided only in the first coupling portion of the first coupling portion and the second coupling portion.

7. The working vehicle according to claim 6, further comprising
a restriction portion that is provided only in the second coupling portion of the first coupling portion and the second coupling portion and restricts rotation of the support frame at a predetermined position.

8. The working vehicle according to any one of claims 1 to 7, further comprising
a takeout port that is provided in the cabin and through which wiring connected to the position detection device is taken out from an inside to an outside of the cabin,
wherein the takeout port
is disposed in a vicinity of a rotation shaft of the support frame.

9. The working vehicle according to claim 8, further comprising
a cover member that is provided on the support frame and covers at least a part of the wiring.

10. The working vehicle according to any one of claims 1 to 7, wherein the support frame
is formed in a left-right asymmetrical shape.

11. The working vehicle according to claim 10, wherein
the support frame includes
a main body formed of a bar-shaped member, and
the main body
is bent to avoid contact with a muffler.
